# EUROPÄISCHE PATENTSCHRIFT

(11) **EP 0 687 111 B1**
(45) Veröffentlichungstag und Bekanntmachung des Hinweises auf die Patenterteilung: **06.08.2003**
(21) Anmeldenummer: 95108497.9
(22) Anmeldetag: 02.06.1995
(51) Int. Cl.: H04N 7/24

(54) **Verfahren zur Codierung/Decodierung eines Datenstroms**
Method for coding and decoding a data stream
Procédé pour le codage et le décodage d'un flux de données

(30) Priorität: 06.06.1994 DE 4419678; 15.10.1994 DE 4436956
(43) Veröffentlichungstag der Anmeldung: 13.12.1995
(73) Patentinhaber: sci worx GmbH, 30419 Hannover (DE)
(72) Erfinder: von Reventlow, Christian, Dr., D-80469 München (DE); Grüger, Klaus, Dr., D-30459 Hannover (DE)
(74) Vertreter: Gramm, Werner, Prof. Dipl.-Ing.

(56) Entgegenhaltungen:
- EP-A- 0 535 272
- EP-A- 0 557 948
- EP-A- 0 577 365
- US-A- 5 016 107
- US-A- 5 027 214
- US-A- 5 249 053

## Beschreibung

Codier- und Decodierverfahren werden dazu verwendet, um die Datenrate zu minimieren und somit möglichst viele Daten mit einer geringen Anzahl von Kanälen zu übertragen oder in möglichst wenig Speicher ablegen zu können.

Beispielsweise sind die Methoden zur Codierung und Decodierung von Bild- und Toninformation in den Standards "Joint Picture Expert Group" (JPEG) und "Motion Picture Expert Group" (MPEG) festgelegt. Geräte zur Durchführung dieser Verfahren basieren zumeist auf digitalen Signalprozessoren (DSP). Auch Ein-Chip-Implementierungen sind bereits auf dem Markt erhältlich.

### Stand der Technik

Ein Datenstrom besteht aus einer Abfolge von Elementen, deren Dateninhalte zu verschiedenen Gruppen zusammengefaßt werden können. Den Gruppen werden in regelmäßigen Abständen neue Dateninhalte durch den Datenstrom zugewiesen. Die Gesamtheit der Gruppen bilden einen Datensatz. Bei der Verarbeitung von Datenströmen ist es zwischen den einzelnen Verfahrensschritten oftmals erforderlich, Datenblöcke zwischenzuspeichern. Außerdem müssen strukturierte Datenströme oftmals in eine andere Gruppierung umgeordnet werden. Der dafür erforderliche Speicherbedarf ist von der maximalen Datenmenge abhängig, die pro Zeiteinheit parallel abgespeichert werden muß.

Der Speicherbedarf kann verringert werden, indem Adressierungsmethoden verwendet werden, bei denen z.B. freie Speicherplätze zwischen blockweise abgelegten Daten ausgenutzt werden. Möglich ist auch eine virtuelle Adressierung, bei der eine logische Adresse, die zur Position des Elementes im Segment proportional ist, durch eine Transformationsfunktion in eine physikalische Adresse umgerechnet wird. Bei großen Datenmengen, wie sie z.B. bei der digitalen Bildverarbeitung anfallen, ist der resultierende Speicherbedarf dennoch zu hoch. Problematisch bleibt außerdem die unverändert hohe Datenrate, mit der die Informationen im physikalischem Speicher abgelegt werden.

Die Datenkompression wird, wie z.B. in der EP 0 577 365 A beschrieben, in einem MPEG-Encoder durchgeführt. In einer ersten Stufe werden die digitalen Videodaten zuerst aus der zellenweisen Bilddarstellung in eine Abfolge von 8x8-Blockmatritzen umsortiert (Frame-Reordering).

Eine zweite Stufe dient der Datenkompression durch bekannte Hybridcodierungsverfahren. Es wird ein Bildspeicher benötigt, in dem vorhergehende Bilder zwischengespeichert und zur Bewegungskompensation des jeweils aktuellen Bildes verwendet werden. Der Speicher ist üblicherweise hinter den Rechenwerken zur Durchführung einer Diskreten-Cosinus-Transformation (DCT) und Quantisierung (Q), sowie der inversen Quantisierung (Q⁻¹) und inversen DCT (DCT⁻¹) angeordnet. Die Bilddaten werden vor dem Speichern transformiert und rücktransformiert, damit die Codierungsfehler bei der Bewegungsschätzung kompensiert werden können.

Herkömmlicherweise werden in beiden Speichern eines MPEG-Encoders unkomprimierte Bilder abgespeichert. Die Speicher müssen somit relativ groß ausgelegt sein. Je nach zu verarbeitenden Bildformaten und Normen besitzen die Speicher für die erste und zweite Stufe Größen zwischen ca. 300 kByte für 1/4 eines TV-Bildes und mehr als 4 MByte für ein hochaufgelöstes TV-Bild (HDTV-Bild).

Die Datendekompression wird, wie z.B. in der EP 0 577 365 A beschrieben in einem MPEG-Decoder durchgeführt. Hierzu werden die gemäß dem MPEG-Standard umgeordneten und kodierten Bilddaten eines Bildes von einem MPEG-Decoder eingelesen. In einer ersten Stufe werden die prinzipiellen Werteangaben und Bildparameter aus dem Datenstrom ausgelesen (Header-Detektion) und die mit variabler Codewortlänge codierten Daten in dem Variable-Length-Decoder (VLD) decodiert. Dabei werden die Bilddaten über eine inverse Zig-Zag-Funktion wieder in eine Blockanordnung umsortiert. Hierzu dient ein erster Bildspeicher. Der umsortierte und VLD-decodierte Datenstrom ist blockweise aufgeteilt und wird in einer zweiten Stufe mittels Dequantizierung (Q⁻¹) und zweidimensionalen inversen diskreten Cosinustransformation (DCT⁻¹) weiter decodiert. Anschließend wird die Bewegungskompensation rückgängig gemacht. Hierzu dient die entsprechende Stufe mit einem Bildspeicher, der auch als Puffer für die Bildausgabe verwendet werden kann.

Aus der EP-A-0 535 272 ist ein integrierter Encoder zur Codierung digitaler Bilddatenströme nach dem MPEG-Standard beschrieben, bei dem Bilddaten zur Bewegungskompensation in einem Speicher zwischengespeichert werden. Zur Reduzierung der Speicherbandbreite und des Speicherbedarfes werden die invers quantisierten Bilddaten, dass heißt die frequenztransformierten Koeffizienten eines Bildes tiefpaßgeflltert, so dass nur die niederfrequenten Anteile der Koeffizienten abgelegt werden. Da die höherfrequenten Koeffizienten vom menschlichen Auge kaum wahrgenommen werden und nur eine geringe Varianz haben, beeinträchtigt das Vernachlässigen der höherfrequenten Anteile, die Bildqualität nicht wesentlich. Diese Art der Abspeicherung führt jedoch zu einem Informationsverlust und ist nicht ohne weiteres für jede beliebige Zwischenspeicherung von Datenströmen bei der Codierung oder Decodierung digitaler Bild- und Tondaten anwendbar.

Es besteht daher das Problem, bei der Implementierung eines integrierten Codierers und/oder Decodierers auf einem einzelnen Chip die benötigte Chipfläche insbesondere durch Reduzierung des Speicherbedarfs zu minimieren.

Die Aufgabe wird durch die erfindungsgemäße integrierte Schaltungseinheit und das entsprechende Verfahren gelöst, indem die zwischenzuspeichemden Daten codiert abgespeichert werden.

Im Unterschied zu der EP-A-0 535 272 findet somit keine Filterung, sondern eine Codierung der zwischenzuspeichernden Daten statt.

Die Codierung und Decodierung zum Zwischenspeichern erfolgt jeweils derart, dass die Strukturen und Größen einzelner Datengruppen sowie der Ort der Zwischenspeicherung unabhängig vom Dateninhalt definiert ist. Ferner ist der Kompressionsfaktor einzelner Datengruppen festgelegt. Auf diese Weise wird sichergestellt, dass die Adressierung der Zwischenspeicher datenunabhängig erfolgt und ein direkter Zugriff auf einzelne Daten möglich wird. Es kann somit vorteilhafter Weise bei der Codierung und/oder Decodierung der Bild- und Tondatenströme unmittelbar so auf den Zwischenspeicher zugegriffen werden, wie es ohne eine codierte Zwischenspeicherung der Daten möglich wäre.

Durch die erfindungsgemäß Codierung der zwischengespeicherten Daten wird das zwischenzuspeichernde Datenvolumen erheblich verringert. Dies hat wesentliche weitere Vorteile zur Folge. So wirkt sich dies insbesondere bei der Videoverarbeitung vorteilhaft dahingehend aus, daß nunmehr wesentlich kleinere Speicher eingesetzt werden können. Bei der Audioverarbeitung kommt in erster Linie zum Tragen, daß sich die Anzahl der Speicherzugriffe und damit die erforderliche Speicherbandbreite verringert. In jedem Fall wird eine erheblich schnellere Zwischenspeicherung der Datenströme erreicht. Außerdem ist der Hardware-Aufwand für die Speicher deutlich kleiner als bisher, und es ist lediglich ein geringer zusätzlicher Gatteraufwand erforderlich.

Erfindungsgemäß erfolgt die Codierung der zwischengespeicherten Daten. einem Kompressionsverfahren, bei dem die Strukturen und Größen einzelner Datengruppen, sowie der Ort der Zwischenspeicherung unabhängig vom Dateninhalt definiert und der Kompressionsfaktor einzelner Datengruppen festgelegt ist, also einzelne Gruppen mit festem Kompressionsfaktor komprimiert werden. Wenn dabei die Strukturen und Größen einzelner Datengruppen und der physikalische Ort der Zwischenspeicherung auf dem Speichermedium unabhängig vom Dateninhalt ist, kann auf die komprimierten Elemente der Datengruppen gezielt zugegriffen werden, und dann läßt sich der Datenstrom wie ein unkomprimierter Datenstrom in einem Schritt umformatieren.

Kompressionsverfahren, bei denen die Datenlängen variiert werden, sind für die Zwischenspeicherung in der Stufe der Umsortierung ungeeignet, weil dann die Umformatierung der Gruppierung vor der Kompression stattfinden muß. Ein direkter Zugriff auf einzelne Gruppen ist dann nicht mehr möglich, ohne zusätzliche Adreßinformationen abzuspeichern. Dies hat zur Folge, daß mit solchen Kompressionsverfahren der Speicherbedarf und die Zugriffsrate für die Umformatierung nicht so stark verringert werden kann.

Vorzugsweise wird bei dem ersten Zwischenspeicher oder bei beiden Zwischenspeichern zur Kompression und Dekompression eine Differential-Puls-Code-Modulation (DPCM) verwendet. Dies bietet den Vorteil des geringeren Rechenaufwandes und einer geringeren Anzahl erforderlicher Gatter. Bei der Bildverarbeitung kann aufgrund der vorhandenen Ähnlichkeit der Zeilenstruktur in Blöcken und Bildern unter Verwendung einer hierarchischen Adressierung auch ein blockweise arbeitender zweidimensionaler Prädiktor für die DPCM eingesetzt werden. Damit kann der Kompressionsfaktor und die Qualität der übertragenen Daten verbessert werden.

### Zeichnungen

Anhand der Zeichnungen sind Ausführungsbeispiele der Erfindung beschrieben. Dabei sind handelsübliche Bausteine mit ihren üblichen Kurzbezeichnungen und alle anderen Schaltungsteile mit Ziffern bezeichnet.

Es zeigen:
- Fig. 1:: MPEG - Encoder mit Bildspeichern für die Umsortierung und die Bewegungskompensation
- Fig. 2:: Verfahren zur Speicherminimierung
- Fig. 3:: MPEG - Decoder mit Bildspeichern für die Umsortierung und die Bewegungskompensation
- Fig. 4:: Spezieller Huffmannkoder zur Durchführung einer VLC

### Ausführungsbeispiele

Das Verfahren kann bei einer Vielzahl von Datenverarbeitungseinrichtungen mit allen denkbaren Kompressionsalgorithmen eingesetzt werden.

Die erforderliche Speicherkapazität wird dadurch verkleinert, daß die Daten vor dem Speichern komprimiert und beim Auslesen wieder dekomprimiert werden. Die resultierende Speicherkapazität berechnet sich in Abhängigkeit von dem Kompressionsfaktor k zu: Spk = Spn / k
mit
- Spk:: Speicherkapazität für komprimierte Datenmenge
- Spn:: Speicherkapazität für unkomprimierte Datenmenge
- k: : Kompressionsfaktor

Der Kompressionsfaktor k ist abhängig von dem gewählten Kompressionsverfahren und der gewünschten Qualität der zu speichernden Daten.

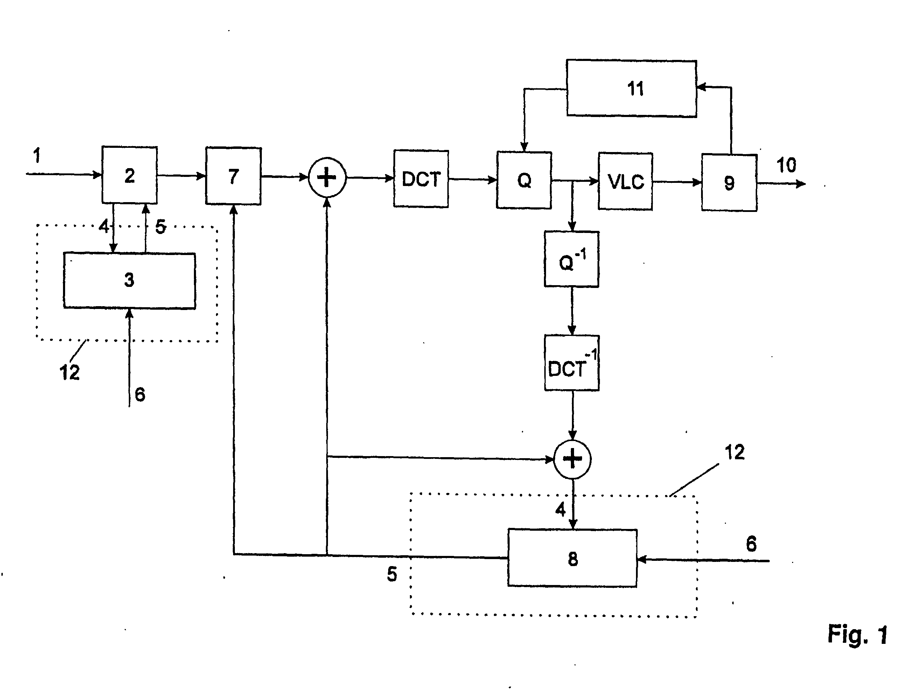

Die Erfindung wird nun am Beispiel der Bilddatenverarbeitung nach dem MPEG-Verfahren näher erläutert. In Fig. 1 ist der Aufbau eines herkömmlichen MPEG-Decoders dargestellt. Die unkomprimierten Daten 1 werden in einem Rechenwerk 2 (Frame-Reordering) umgeordnet, wobei ein Bildspeicher 3 zum Schreiben 4 und Lesen 5 genutzt wird. Der Speicher wird durch eine Steuereinheit mittels Controlsignale 6 gesteuert. Der nachfolgende Bewegungsschätzer 7 greift auf den zweiten Bildspeicher 8 zu. Dort sind die unkomprimierten Daten vorhergehender Bilder abgelegt. Anschließend folgt die Kompression mittels DCT und Quantisierung Q. Die Daten werden dann zum einen einer Variable-Length-Codierung (VLC) unterzogen und zur Ausgabe in einem Zwischenspeicher 9 gepuffert und als komprimierter Datenstrom 10 ausgegeben. Zum anderen wird eine inverse Quantisierung und eine inverse DCT durchgeführt und die Daten werden in dem Bildspeicher 8 abgelegt. Durch eine Quantisierungssteuerung 11 (Rate-Control) kann der Quantisierungsfaktor blockweise nachgeregelt werden.

Das erfindungsgemäße Verfahren kann in die erste Stufe zur Umsortierung und die zweite Stufe zur Bewegungskompensation eingefügt werden. Die Einsatzbereiche der Erfindung im Encoder sind durch ein gestrichelten Block 12 dargestellt.

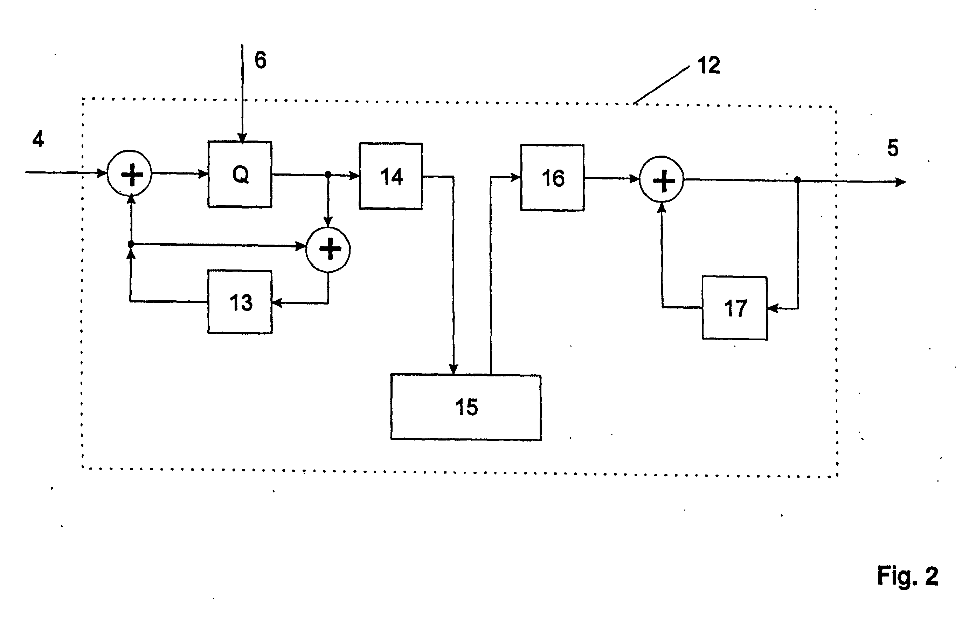

Die Umsortierung kann dann in einem Schritt durchgeführt werden, wenn ein fester Kompressionsfaktor für einzelne Gruppen unabhängig vom Dateninhalt vorgegeben wird. Dies ist durch den Einsatz geeigneter Quellencodierungsverfahren erreichbar. Ein mögliches Verfahren ist die verlustbehaftete DPCM mit fester Codewortlänge, wie sie in Fig. 2 dargestellt ist, oder eine entsprechende Transformationscodierung.

In Fig. 2 ist ein Block 12 zur Speicherminimierung dargestellt. Anstelle des unkomprimierten Abspeicherns der Original-Bilddaten in den Speicher werden diese einer DPCM unterzogen. Hierfür wird der Datenstrom 4 mit Daten, die durch einen Prädiktor 13 vorhergesagt sind, verrechnet und quantisiert (Q). Anschließend wird der Datenstrom mit einem Huffmann-Verfahren 14 codiert und in den Speicher 15 geschrieben. Zum Auslesen wird der Datenstrom in einem Huffmann-Decoder 16 decodiert und mit den, mittels Prädiktor 17 vorhergesagten Werten verrechnet.

Dieses Verfahren der Codierung und Decodierung mittels DPCM hat den Vorteil, daß der Kompressionsfaktor festgelegt werden und somit auf die Daten im Speicher gezielt zugegriffen werden kann. Außerdem ist der Gatteraufwand zur Implementation in einem Halbleiterbaustein recht gering.

Zur separaten Blockzeilencodierung /-decodierung zur Umsortierung ist erfahrungsgemäß ein Kompressionsfaktor von zwei einsetzbar, ohne daß wesentliche Beeinträchtigungen der Bildqualität auftreten. Durch eine hierarchisch strukturierte Adressierung kann direkt auf jede Blockzeile zugegriffen werden. Damit können alle Umformatierungsoperationen nach dem Einschreiben in den Speicher 15, der als RAM mit wahlfreiem Zugriff ausgeführt sein sollte, in einem Schritt durch direkte Adressierung der Blockzeilen beim Auslesen durchgeführt werden.

Da jede Gruppe ohne Bezug auf benachbarte Gruppen komprimiert wurde, kann anschließend das Signal wieder separat dekomprimiert werden.

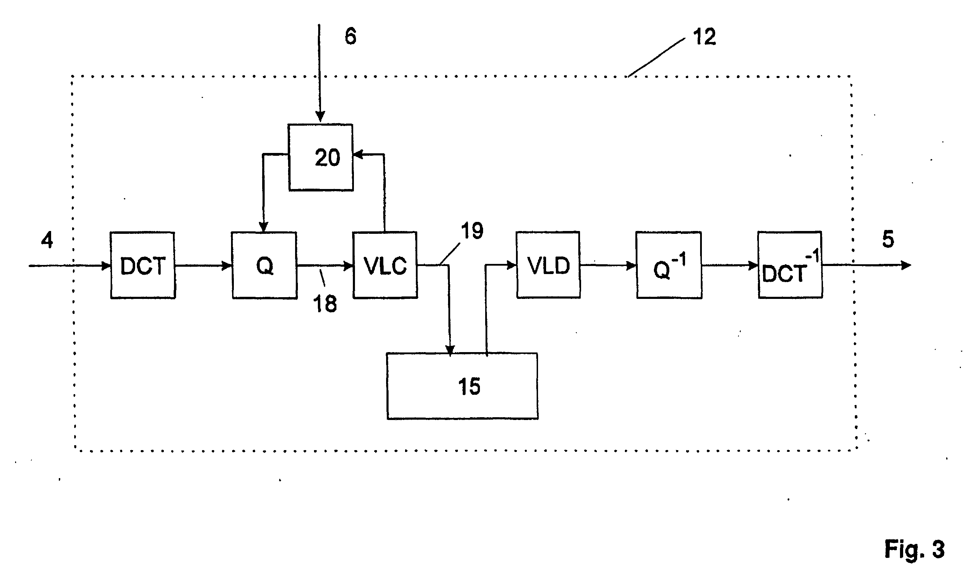

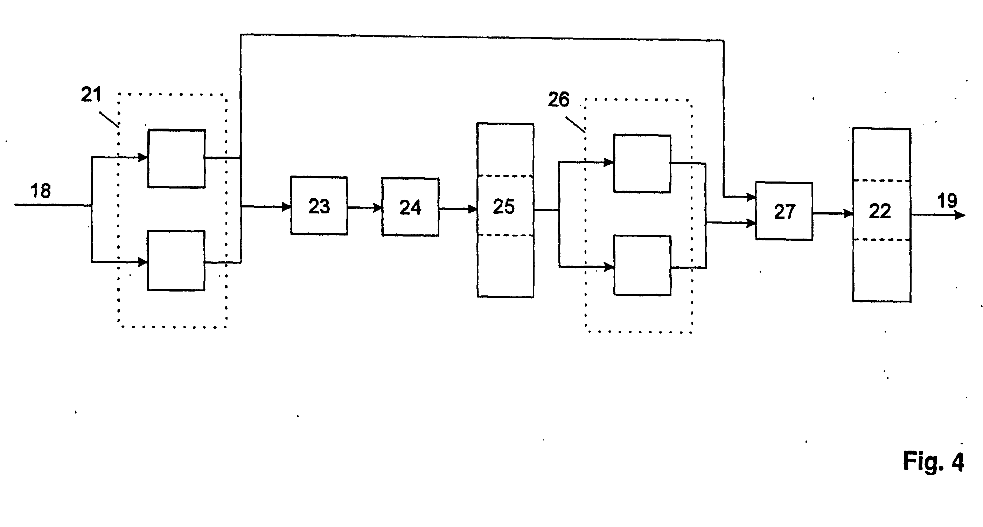

Ein anderes Ausführungsbeispiel der Erfindung ist in Fig. 3 dargestellt. Der Datenstrom 4 wird einer zweidimensionalen diskreten Cosinustransformation (DCT) unterzogen und anschließend mittels einer Quantisierungsstufe (Q) quantisiert. Die quantisierten Daten 18 werden in einer besonderen Huffmannkodierung (VLC), die in Fig. 4 dargestellt ist, komprimiert. Der komprimierte Datenstrom 19 wird dann im Speicher 15 abgelegt. Die Steuerung der Quantisierung übernimmt eine Quantisierungssteuerung 20 (Rate-Control). Beim Auslesen der komprimierten Daten werden diese Schritte dann mittels der entsprechenden inversen Operationen rückgängig gemacht (VLD, Q⁻¹, DCT⁻¹). Dieses Verfahren, das dem JPEG-Standard ähnlich ist, weist dabei folgende Besonderheiten auf:
a) Bilder werden nur Intra-codiert.
b) Bilder werden unabhängig von der Bildkomplexität auf eine feste Größe komprimiert.
c) Die Quantisierungssteuerung 20 arbeitet prädiktiv, d.h. sie berücksichtigt während der Bildkompression auch die noch zu erwartenden Datenmengen des noch nicht bearbeiteten Bitrestes.
d) Die Huffmann-Tabellen werden in Abhängigkeit von der Kompressionsrate, die wiederum durch den Anwendungsfall bestimmt ist, speziell angepaßt.
e) Falls ein unkodierter Block (8x8 Pixel) weniger Daten umfaßt als ein kodierter, wird er uncodiert abgespeichert.

Für die DCT kann eine beliebige Architektur verwendet werden, sofern sie die Anforderungen an die Genauigkeit gemäß des zugrundeliegenden Standards (z.B. MPEG oder H.261) erfüllt.

Die Quantisierung arbeitet in ihren Grundzügen analog zu JPEG und besitzt auch denselben zweistufigen Aufbau. Die Quantisierungssteuerung 20 regelt den Quantisierungsfaktor blockweise nach. Dies geschieht in Abhängigkeit des Füllstands des Bildspeichers und der zu erwartenden Komplexität des Bildes.

Ein spezieller Huffmannkoder ist in Fig. 4 dargestellt. Zuerst werden die quantisierten Daten im Zigzag-Scan aus einem ersten RAM-Speicher 21 gelesen. Der erste Wert, die Gleichkomponente (DC) im Frequenzbereich, wird uncodiert in den Ausgangsspeicher 22 geschrieben. Die nachfolgenden Wechselkomponenten (AC-Werte) werden analog zum MPEG-Standard nach dem Run-Length-Verfahren kodiert. Die dadurch entstandenen Wertepaare werden dann mittels einer Huffmann-Tabelle in einen Bitcode variabler Länge transformiert. Hierzu dient ein Huffmann-Coder 23, ein Multiplexer 24 und ein Registerspeicher 25. Am Überlauf des Ausgangsspeichers 26 erkennt man, ob der kodierte Block mehr Daten enthält als der uncodierte. Dann wird der Block zwar DCT-transformiert aber nicht komprimiert ausgegeben.

Am Ausgang des VLC erscheint also ein Bitstrom mit kodiertem bzw. teilweise auch uncodierten Daten, die entsprechend der Wortbreite des Speichers mit einem Multiplexer 27 parallelisiert und in dem Registerspeicher 22 abgespeichert werden. In einem weiteren Speicher muß für jeden Block noch ein Flag gesetzt werden, der kennzeichnet, ob es sich um einen uncodierten oder kodierten Block handelt. Außerdem muß der zum Block gehörige Quantisierungsfaktor abgelegt werden.

Durch Algorithmen, die abhängig vom Anwendungsfall sind, kann sichergestellt werden, daß der Bildspeicher immer voll ausgenutzt wird, so daß sich ein Optimum zwischen Bildqualität und Speicherbedarf einstellt. Die Quantisierungssteuerung 20 bestimmt zusammen mit der Quantisierung (Q) und der Huffmann-Codierung (VLC) den Kompressionsfaktor.

Die Decodierung der Bildspeicherdaten nach dem inversen Verfahren erfolgt analog zur VLC. Dabei muß das Flag ausgewertet werden, welches der Kennzeichnung dient, ob es sich um einen codierten oder uncodierten Block handelt.

Die Dequantisierung arbeitet analog zur Quantisierung. Es werden die 12 bitbreiten Eingangsdaten für die inverse DCT erzeugt.

Zur inversen diskrete Cosinustransformation (DCT⁻¹) kann jede Hardware verwendet werden, sofern die Anforderungen des jeweiligen Standards unterstützt werden.

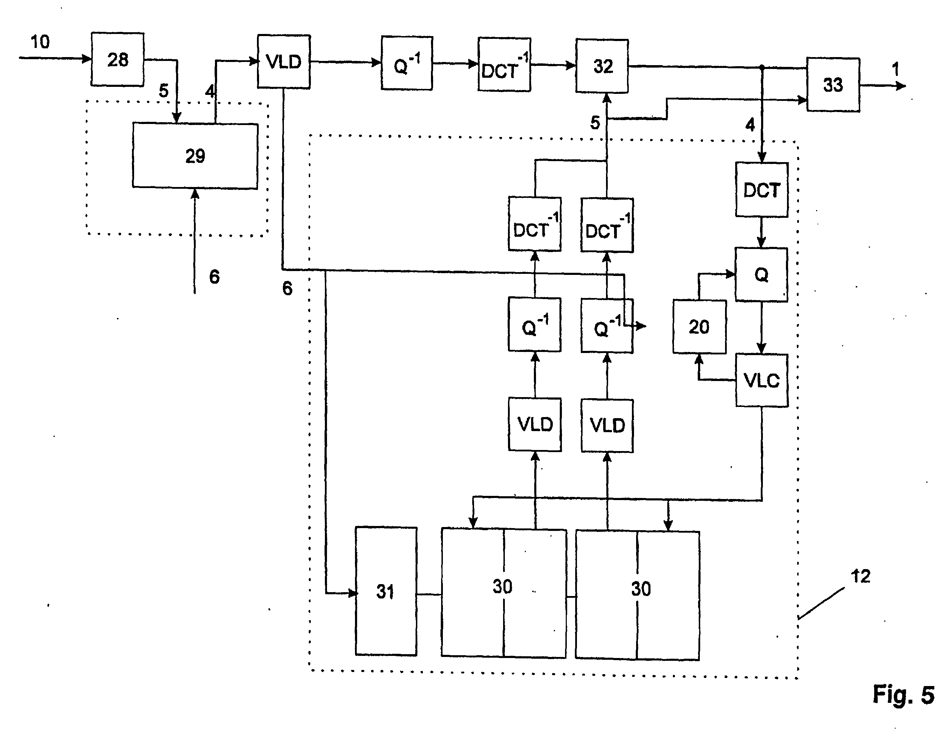

Die Einsatz der Erfindung wird ferner an einem MPEG-Videodecoder in Fig. 5 dargestellt:

Dabei kann das Verfahren zum einen zur Umsortierung des Datenstroms nach der Header-Detektion 28 verwendet werden. Der hierfür üblicherweise verwendete Zwischenspeicher 29 kann durch das erfindungsgemäße Verfahren 12 ersetzt werden.

Vorteilhaft kann das Verfahren zur Bewegungskompensation eingesetzt werden. Die mittels VLD, Q⁻¹ und DCT⁻¹ decodierten Bilddaten werden, wenn es sich um I- oder P-Bilder handelt, nach dem in Fig. 3 gezeigten Verfahren komprimiert und in den Bildspeicher 30 geschrieben. Dort stehen sie für ein zukünftiges zu decodierendes P- bzw. B- Bild zur Verfügung. Auf diese Weise stehen im Bildspeicher immer die letzten beiden P-Bilder bzw. ein I- und ein P-Bild komprimiert zur Verfügung. Ober das inverse Verfahren werden die Daten wieder dekomprimiert und der Dekompensationsstufe 31 zugeführt. Die B-Bilder werden von der Dekompensationsstufe 31 direkt über einen Multiplexer 32 an die Ausgabeeinheit weitergereicht und nicht zwischengespeichert.

Der Speicher 30 ist in zwei Teilbereiche mit je zwei Bänken aufgeteilt. Die Speicheradressen werden durch die Vektoren des VLD generiert und in einem Adreßspeicher 33 abgelegt.

Die nachfolgende Einheit muß dazu in der Lage sein, die Bilddaten blockweise und nicht zeilenweise, wie bei Monitoren erforderlich, entgegenzunehmen.

Der abgeschätzte Hardwareaufwand mit und ohne Speicherminimierung ist im folgenden im Vergleich stellvertretend für einen MPEG - Decoder, für zwei CCIR 601 Norm - Bilder, bei 4:2:0 Chromaformat aufgeführt:

Wählt man für höchste Bildqualität einen Kompressionsfaktor k=3 für die Bildspeicherdaten, so werden über 1/50 s gemittelt nur 44/3 MBytes übertragen. Dies entspricht einer Bitrate von 14.7 MByte/s. Die dafür erforderliche Speichergröße des Bildspeichers beträgt dann: 720 Bildspalten x 288 Bildzeilen x (8 + 4 Bit pro Pixel) x 4 Speicherbänke (2 I- und 2 P-Bilder) / k = ca. 10/k MBit = ca. 3.3 MBit.

Für jeden Block müssen die Startadressen zusammen mit dem Quantisierungsfaktor und dem Flag für kodierte oder uncodierte Daten in einem Adreßspeicher abgelegt werden. Unter den oben gemachten Voraussetzungen ergibt sich eine Wortbreite der Adresse für den Bildspeicher von 26 Bit pro Block.

Die Anzahl der benötigten Einträge des Adreßspeichers richtet sich nach der Blockanzahl, der Blockgröße und der Norm des Bildes: 720 Bildspalten / 8 (horizontale Blockgröße) x 288 Bildzeilen / 8 (vertikale Blockgröße) x 1,5 (Luminanz und Chrominanz) = 4860 Blöcke pro Speicherbank. Daraus folgt eine Gesamtzahl von 19440 Einträgen à 26 Bit, d.h. ca. 505 KBit für den Adreßspeicher.

Für die spezielle Ansteuerung des Bildspeichers in einem MPEG - Decoder wird ein Mehraufwand an Hardware von einer zweidimensionalen DCT, einem Quantisierer (Q) und einem Huffmannkoder (VLC) inkl. Quantisierungssteuerung 20 erforderlich. Zum Auslesen aus dem Bildspeicher werden pro Teilspeicher eine Inverse DCT (DCT⁻¹), ein Dequantisierer (Q⁻¹) und ein Huffmann-Decoder (VLD) benötigt.

| zu implementierende | Speicherminimierung | |
|---|---|---|
| Hardware | mit | ohne |
| 2 DCT⁻¹ (60 MHz) | 24000 Gatter | 0 Gatter |
| 2 Q⁻¹ | 10000 Gatter | 0 Gatter |
| 2 VLD | 10000 Gatter | 0 Gatter |
| 1 VLC | 8000 Gatter | 0 Gatter |
| 1 Q | 5000 Gatter | 0 Gatter |
| 1 DCT (16 MHz) | 8000 Gatter | 0 Gatter |
| 1 Rate-Control | 5000 Gatter | 0 Gatter |
| Adreßspeicher | 505 KBit | 0 Bit |
| Bildspeicher | 3.3 MBit | 10 MBit |
| GESAMT | 70000 Gatter + ca. 3.8 MBit | 10 MBit |

Insgesamt ergibt sich also für den Bildspeicher ein Speicherbedarf von 3,3 MBit (Datenspeicher) + 0,5 MBit (Adreßspelcher) = ca. 3,8 MBit gegenüber 10 MBit für das unkomprimierte Abspeichern der Bilder bei CCIR 601, 4:2:0.

Eventuell könnte bei einem Zeitmultiplexbetrieb von einzelnen Modulen (z.B. DCT's, Q's) bei Verwendung schneller Technologien der Hardwareaufwand noch reduziert werden. Dies ist jedoch vom einzelnen Anwendungsfall und von der Grenzfrequenz der Technologie gegenüber der zu verarbeitenden normabhängigen Datenmenge abhängig.

Bei der Anwendung des beschriebenen Verfahrens zur Bewegungskompensation erhält man im Normalfall ein Aufaddieren der durch diese Kompression entstandenen Fehler bis zum nächsten I-Bild. Falls dies nicht erwünscht ist, kann die Fehlerfortpflanzung auf die aufeinanderfolgenden B-Bilder mit folgendem Verfahren begrenzt werden:

Zuerst wird ein I- oder P-Bild unkomprimiert in den Speicher geschrieben. Das danach einlaufende I- oder P-Bild wird, bedingt durch die maximale Länge des Bewegungsvektors, für die ersten 64 Zeilen ebenfalls unkomprimiert abgelegt und mit dem unkomprimierten I- / P-Bild dekompensiert. Nun wird gleichzeitig damit begonnen, das I-Bild auszulesen, zu komprimieren und an anderer Stelle wieder in den Speicher zu schreiben.

Die Kompression in dem erfindungsgemäßen Verfahren kann auch ohne Transformation durchgeführt werden. Die Bilddaten können, ohne daß sie durch eine DCT / DCT⁻¹ oder andere Transformationen in den Frequenzbereich überführt wurden, mittels des Shannonschen Entropietheorems im Ortsbereich komprimiert werden. Hierzu wird zuerst eine optimale Huffmanntabelle der Daten im Ortsraum errechnet, wobei die Häufigkeitsverteilung der Helligkeits- bzw. Chrominanzwerte im Ortsbereich genutzt wird. Die Huffmanntabelle wird dabei entweder on-line pro Bildausschnitt ermittelt oder fest vorberechnet. Der Vorteil dieses Verfahrens liegt in einer geringeren Komplexität der Kompression. Um eine feste Ausgangsdatenrate zu garantieren, muß dieses Verfahren um eine geeignete Quantisierungsstufe erweitert werden.

## Patentansprüche

1. Integrierte Schaltungseinheit zur Codierung und/oder Decodierung von Bildund/oder Tondatenströmen mit mindestens einem Zwischenspeicher (3) mittels Umsortierung und Komprimierung bzw. Dekomprimierung der Daten, wobei die Daten zur Umsortierung in einem Zwischenspeicher abgelegt und in anderer Ordnung aus dem Zwischenspeicher ausgelesen und dekomprimiert werden, **gekennzeichnet durch**,
mindestens einen an jeweils einen der Zwischenspeicher (3) geklemmten Zwischenspeicher-Codierer zur Komprimierung der abzuspeichernden Daten und Schreiben der komprimierten Daten in den Zwischenspeicher (3) und
mindestens einen an jeweils einen der Zwischenspeicher (3) geklemmten Zwischenspeicher-Decodierer zur Dekomprimierung der abgespeicherten Daten und Lesen der komprimierten abgespeicherten Daten in anderer Ordnung aus dem Zwischenspeicher (3),
wobei der Zwischenspeicher-Codierer und Zwischenspeicher-Decodierer so ausgebildet sind, dass die Strukturen und Größen einzelner Datengruppen, sowie der physikalische Ort der Zwischenspeicherung in dem Zwischenspeicher (3) unabhängig vom Dateninhalt definiert sind und der Kompressionsfaktor einzelner Datengruppen festgelegt ist.

2. Integrierte Schaltungseinheit nach Anspruch 1, **dadurch gekennzeichnet, dass** der Zwischenspeicher-Codierer und Zwischenspeicher-Decodierer zur Kompression und Dekompression mit einer Differential-Puls-Code-Modulation (DPCM) ausgebildet sind.

3. Integrierte Schaltungseinheit nach Anspruch 2, **dadurch gekennzeichnet, dass** der Zwischenspeicher-Codierer einen Prädiktor (13) zur Vorhersage von Daten hat und zur Verrechnung und Quantisierung des abzuspeichernden Datenstroms (4) mit den vorhergesagten Daten ausgebildet ist, und der Zwischenspeicher-Codierer einen Huffmann-Coder zur Codierung des verrechneten und quantisierten Datenstroms (4) hat.

4. Integrierte Schaltungseinheit nach Anspruch 3, **dadurch gekennzeichnet, dass** der Zwischenspeicher-Decodierer einen Huffmann-Decoder (16) zum Decodieren des aus dem Zwischenspeicher (3) ausgelesenen Datenstroms und einen Prädiktor (17) zur Vorhersage von Daten aufweist, wobei der Zwischenspeicher-Decodierer zur Verrechnung der mit dem Huffmann-Decoder (16) decodierten ausgelesenen Daten mit den vorhergesagten Daten ausgebildet ist.

5. Verfahren zu Codierung und/oder Decodierung eines Bild- und/oder Tondatenstroms mit den Schritten der Umsortierung und Komprimierung bzw. Dekomprimierung der Daten, wobei die Daten zur Umsortierung in einem Zwischenspeicher (3,8) abgelegt und in anderer Ordnung aus dem Zwischenspeicher (3) ausgelesen und dekomprimiert werden, **dadurch gekennzeichnet, dass** die Daten komprimiert so in dem Zwischenspeicher (3) abgelegt werden, dass die Strukturen und Größen einzelner Datengruppen sowie der physikalische Ort der Zwischenspeicherung in dem Zwischenspeicher (3, 8) unabhängig vom Dateninhalt definiert sind und der Kompressionsfaktor einzelner Datengruppen festgelegt ist.

6. Verfahren nach Anspruch 1, **dadurch gekennzeichnet, dass** zur Codierung und Decodierung eine Differential-Puls-Code-Modulation (DPCM) verwendet wird.

7. Verfahren nach Anspruch 6, **dadurch gekennzeichnet, dass** die Differential-Puls-Code-Modulation (DPCM) mit blockweise arbeitenden zweidimensionalen Prädiktoren (13 und 17) durchgeführt wird.

## Claims

1. Integrated circuit unit for coding and/or decoding picture-data and/or sound-data streams, having at least one temporary memory (3), by means of re-sorting and compressing or decompressing the data, wherein the data are stored for re-sorting in a temporary memory and are read out of the temporary memory in another order and decompressed, **characterized by**
at least one temporary memory/encoder, clamped to one of the temporary memories (3) in each case, for compressing the data to be stored and for writing the compressed data into the temporary memory (3), and
at least one temporary memory/decoder, clamped to one of the temporary memories (3) in each case, for decompressing the stored data and for reading the compressed stored data out of the temporary memory (3) in another order,
wherein the temporary memory/encoder and temporary memory/decoder are designed in such a way that the structures and sizes of individual data groups and also the physical location of the temporary storage in the temporary memory (3) are defined independently of the data content and the compression factor of individual data groups is fixed.

2. Integrated circuit unit according to Claim 1, **characterized in that** the temporary memory/encoder and temporary memory/decoder are designed for compression and decompression by differential pulse-code modulation (DPCM).

3. Integrated circuit unit according to Claim 2, **characterized in that** the temporary memory/encoder has a predictor (13) for predicting data and is designed to reckon up and quantify the data stream (4) to be stored with the predicted data, and the temporary memory/encoder has a Huffmann encoder for encoding the reckoned-up and quantified data stream (4).

4. Integrated circuit unit according to Claim 3, **characterized in that** the temporary memory/decoder has a Huffmann decoder (16) for decoding the data stream read out of the temporary memory (3) and a predictor (17) for predicting data, wherein the temporary memory/decoder is designed to reckon up the data read out and decoded with the Huffmann decoder (16) with the predicted data.

5. Method of encoding and/or decoding a picture and/or sound data stream, comprising the steps of re-sorting and compressing or decompressing, respectively, the data, wherein the data for re-sorting are stored in a temporary memory (3, 8) and are read out from the temporary memory (3) in another order and decompressed, **characterized in that** the data compressed are stored in the temporary memory (3) in such a way that the structures and sizes of individual data groups and also the physical location of the temporary storage in the temporary memory (3, 8) are defined independently of the data content and the compression factor of individual data groups is fixed.

6. Method according to Claim 1, **characterized in that** a differential pulse-code modulation (DPCM) is used for encoding and decoding.

7. Method according to Claim 6, **characterized in that** the differential pulse-code modulation (DPCM) is performed with two-dimensional predictors (13 and 17) working in blocks.

## Revendications

1. Circuit intégré pour le codage et/ou le décodage de flux de données vidéo et/ou audio, comprenant au moins une mémoire de travail (3), par reclassement, compression et respectivement décompression des données, dans lequel pour le reclassement les données sont déposées dans une mémoire de travail et sont extraites de la mémoire de travail dans un autre ordre et décomprimés, **caractérisé par** :
au moins un codeur de mémoire de travail, connecté chacun à une des mémoires de travail (3), pour comprimer les données à mettre en mémoire et inscrire les données comprimées dans la mémoire de travail (3), et
au moins un décodeur de mémoire de travail, connecté chacun à une des mémoires de travail (3), pour décomprimer les données mises en mémoire et extraire de la mémoire de travail (3), dans un autre ordre, les données comprimées mises en mémoire,
le codeur de mémoire de travail et le décodeur de mémoire de travail étant ainsi conçus que les structures et tailles de groupes de données individuels, ainsi que la localisation physique de la mémorisation de travail (3), sont définies indépendamment du contenu des données, et le facteur de compression des groupes de données individuels est déterminé.

2. Circuit intégré selon la revendication 1, **caractérisé en ce que** le codeur de mémoire de travail et le décodeur de mémoire de travail sont conçus pour la compression et la décompression avec une modulation "Diffenrential-Puls-Code Modulation" (DPCM)

3. Circuit intégré selon la revendication 2, **caractérisé en ce que** le codeur de mémoire de travail possède un prédicteur (13) pour la prédiction de données et le décomptage et la quantification du flux de données (4) à mettre en mémoire avec les données prédites, et le codeur de mémoire de travail possède un codeur Huffmann pour coder le flux de données compté et quantifié (4).

4. Circuit intégré selon la revendication 3, **caractérisé en ce que** le décodeur de mémoire de travail comprend un décodeur Huffmann (16) pour décoder le flux de données extrait de la mémoire de travail (3) et un prédicteur (17) pour la prédiction de données, le décodeur de mémoire de travail étant conçu pour décompter les données lues décodées avec le décodeur Huffmann (16) avec les données prédites

5. Procédé pour coder et/ou décodé un flux de données vidéo et/ou audio, comprenant les étapes consistant à reclasser et comprimer et respectivement décomprimer des données, les données étant déposées pour le reclassement dans une mémoire de travail (3,8), et extraites de la mémoire de travail (3) dans un autre ordre et décomprimées, **caractérisé en ce que** les données sont déposées à l'état comprimé dans la mémoire de travail (3) de manière que les structures et tailles des groupes de données individuels ainsi que la localisation physique de la mémorisation de travail dans la mémoire de travail (3,8) sont définies indépendamment du contenu des données et le facteur de compression des groupes de données individuels est déterminé.

6. Procédé selon le revendication 1, **caractérisé en ce que** pour le codage et le décodage on utilise une Differential-Puls-Code-Modulation (DPCM).

7. Procédé selon la revendication 6, **caractérisé en ce que** la Differential-Puls-Code-Modulation (DPCM) est effectuée avec des prédicteurs (13 et 17) bidimensionnels travaillant par blocs.
